# DEMANDE DE BREVET EUROPEEN

(11) **EP 1 502 731 A1**
(43) Date de publication de la demande: **02.02.2005**
(21) Numéro de dépôt: 03291867.4
(22) Date de dépôt: 28.07.2003
(51) Int. Cl.: B32B 15/08, B65D 65/40, B29C 47/06

(54) **Film composite d'emballage et procédé de fabrication**

(71) Demandeur: Breger, Guy, F-89100 Rosoy-Sens (FR)
(72) Inventeur: Breger, Guy, 89100 Rosoy (FR); Breger, Alain, 89100 St. Clément (FR); Breger, Jean, 34500 Béziers (FR)
(74) Mandataire: Kihn, Pierre Emile Joseph

(57) **Abrégé**

Film composite (10) d'emballage comprenant :
- un premier film polymère (12) avec une première face (14) et une deuxième face (16) opposée à la première face (14) ;
- une couche d'identification (24) sur au moins une zone de la première face (14) du premier film polymère (12), la couche d'identification (24) comprenant une première impression (32) ;
- un deuxième film polymère (18) avec une première face (20) et une deuxième face (22) opposée à la première face (20), la première face (20) du deuxième film polymère (18) étant tourné vers le premier film polymère (12) ; et
- au moins une couche adhésive (26) entre la couche d'identification (24) du premier film polymère (12) et le deuxième film polymère (18).

## Description

### Introduction

La présente invention concerne un film composite d'emballage et son procédé de fabrication.

### État de la technique

Les barquettes destinées à la préparation, à la cuisson ou au réchauffage de plats préparés sont souvent en matière polymère tel que le polychlorure de vinyle (PVC), le polyéthylène (PE), le polypropylène (PP), le polyester (PET) ou le polycarbonate (PC).

Les conditions d'usage d'une barquette, pour réchauffer son contenu, sont limitées par la thermorésistance de la matière polymère utilisée. En effet, la température doit être inférieure à la température de ramollissement du polymère afin d'éviter que la barquette ne fonde. Ainsi, une barquette en PP n'est utilisable qu'à une température inférieure à 120°C. Cependant, dans un four électrique de cuisson ménager, cette température est très souvent dépassée. Une barquette en PET a une thermorésistance de 220°C, ce qui veut dire qu'une telle barquette peut être réchauffée à une température de presque 220°C. Pour des questions d'hygiène et de conservation du contenant, ces barquettes sont scellées. Ces barquettes sont généralement scellées au moyen d'un opercule constitué d'un polymère généralement identique à celui de la barquette. Les scellages sont généralement réalisés à la température de fusion du polymère utilisé.

Si on veut réchauffer le contenu d'une barquette à une température supérieure à 220°C, il existe la possibilité d'utiliser comme polymère le PC. Il est possible de réaliser des barquettes en polycarbonate par extrusion moulage. La difficulté apparaît quand il est souhaité de fermer cette barquette avec un opercule étanche permettant entre autre la pasteurisation (par exemple 100°C pendant 30 min) ou la stérilisation (par exemple 121°C pendant 30 min).

Au vu des différents polymères qui peuvent être utilisés pour constituer la barquette et de leurs températures de fusion bien différentes, il est important que le consommateur puisse immédiatement identifier et différentier les barquettes à haute thermorésistance des barquettes à thermorésistance habituelle.

Pour de nombreux contenus, il est souvent souhaité d'identifier le contenu par un emballage comprenant des signes distinctifs évidents et difficilement copiables.

### Objet de l'invention

L'objet de la présente invention est de proposer un film composite d'emballage qui peut être facilement et sûrement identifié. Cet objet est résolu par le film composite d'emballage selon la revendication 1 et son procédé de fabrication selon la revendication 15.

### Description générale de l'invention revendiquée avec ses principaux avantages.

Conformément à l'invention, cet objectif est atteint par un film composite d'emballage comprenant :
- un premier film polymère avec une première face et une deuxième face opposée à la première face ;
- une couche d'identification sur au moins une zone de la première face du premier film polymère, la couche d'identification comprenant une première impression ;
- un deuxième film polymère avec une première face et une deuxième face opposée à la première face, la première face du deuxième film polymère étant tourné vers le premier film polymère ; et
- au moins une couche adhésive entre la couche d'identification du premier film polymère et le deuxième film polymère.

La couche d'identification étant placée en sandwich entre le premier et le deuxième film polymère, ne peut pas être facilement modifié.

Avantageusement, la couche d'identification comprend une couche de polymère, de préférence thermosensible, entre le premier film polymère et la première impression, la couche de polymère étant au moins partiellement estampée et/ou métallisée.

Le premier film polymère peut être enduit de la couche de polymère thermosensible et passé à travers deux cylindres, dont le premier ― celui en contact avec le premier film polymère ― peut être en polyuréthane, et le deuxième ― celui en contact avec la couche de polymère thermosensible ― peut être un cylindre métallique comprenant une matrice avec des micro-reliefs. La pression et la température de la matrice sont adaptés pour transmettre en creux dans la couche de polymère thermosensible les micro-reliefs de la matrice. La couche de polymère thermosensible est ensuite durcie par refroidissement.

La couche de polymère peut être métallisée sous vide dans une enceinte close où règne un vide partiel mais suffisant pour permettre l'évaporation d'un film en fusion dans des creusets sous lequel défile la couche de polymère estampée à métalliser.

La couche de polymère estampée et métallisée permet de faire apparaître dans le film composite des images diffractives, des hologrammes difficilement copiables.

Avantageusement, la couche de polymère métallisée est gravée aux endroits non recouverts par la première impression. En gravant les parties de la couche de métal non recouverte par la première impression, des zones de transparence sont créées. La gravure de la couche de métal peut être soit chimique à l'aide d'une base et/ou d'un acide, soit électrochimique à l'aide d'un électrolyte composé d'un ou de plusieurs sels et d'un courant électrique, soit par destruction laser.

La couche d'identification peut en outre comprendre une deuxième impression sur la première impression et/ou une troisième impression sur la première face du deuxième film polymère donnant ainsi au film composite des éléments d'identification supplémentaires.

Avantageusement, la couche d'identification comprend, de préférence dans la première et/ou deuxième et/ou troisième impression, au moins un marqueur pigmentaire et/ou un marqueur colorant et/ou un marqueur fluorescent et/ou un marqueur phosphorescent et/ou un marqueur irisant et/ou un marqueur ADN et/ou un additif absorbeur d'énergie laser.

Des éléments d'identification supplémentaires peuvent ainsi être intégrés dans le film composite. Ces éléments d'identification peuvent avoir des niveaux de traçabilité différents. Certains peuvent être reconnus facilement à l'oeil nu, d'autres nécessitant des instruments particuliers.

Le marqueur ADN permet d'intégrer dans le film polymère un élément d'identification qui ne peut être reconnu qu'avec des moyens de laboratoire. Avec un tel élément d'identification, l'authenticité du produit dans l'emballage peut être vérifiée avec très grande certitude.

La première et/ou deuxième et/ou troisième impression et/ou la couche de polymère estampée et/ou la couche de métal peut être appliquée par héliographie et/ou flexographie et/ou offset, de préférence à une résolution comprise entre 10 et 150 µm. L'héliographie, la flexographie et l'impression offset permettent d'imprimer des motifs d'une très grande finesse, entre 10 et 150 µm. Une telle impression à haute résolution permet une excellente qualité d'impression avec des contours nets.

Le film composite comprend avantageusement une couche d'aluminium, ayant de préférence une épaisseur comprise entre 4 et 50 µm, avantageusement 12 µm, collée entre la couche d'identification du premier film polymère et le deuxième film polymère.

Une telle couche d'aluminium assure une protection contre la lumière et, plus particulièrement contre les rayons UV. La couche d'aluminium donne aussi au film composite une mémoire de pli, permettant ainsi de plier le film composite et de maintenir le pli. Lorsque le film composite est par exemple utilisé comme opercule pour un récipient, il est possible de plier l'opercule pour avoir une ouverture, sans devoir complètement l'enlever du récipient.

De plus, la conductivité thermique de l'aluminium facilite la transmission de la chaleur de fers de scellage aux zones de soudure de telle sorte que, lorsque les fers de soudage sont appliqués contre une face extérieure du film composite pour sceller le film composite sur un récipient, le gradient de température de la zone scellante est compris entre 2 et 25°C de préférence 5°C, ce qui évite la déformation par la chaleur du premier film polymère et donc des images diffractives sur le premier film polymère.

La couche adhésive comprend de préférence une colle à catalyse avec ou sans solvant. Une telle colle permet un assemblage performant entre le premier film polymère et le deuxième film polymère.

Selon un mode de réalisation particulièrement préféré, le film composite comprend en outre une couche de colle hotmelt sur la deuxième face du deuxième film polymère. Le dépôt d'une couche de colle hotmelt sur le deuxième film polymère permet de sceller ce dernier sur de multiples supports qui étaient jusqu'à présent considéré comme inscellables.

La couche de colle hotmelt comprend avantageusement au moins 2 à 50% en poids, de préférence 30% en poids, d'éthylvinylacétate (EVA). L'EVA a une bonne adhésion avec le polycarbonate.

La couche de colle hotmelt peut comprendre un mélange de cire, de paraphine, de polymères thermofusibles (p.ex. polyoléfines thermofusibles) et d'éthylvinylacétate.

Avantageusement, la couche de colle hotmelt comprend des particules minérales non-fusibles, tel que la silice, de préférence dans une proportion pondérale de 1 à 20%, de préférence 5%. En introduisant dans la colle hotmelt des particules minérales non-fusibles, la soudure entre le film composite et le support sur lequel il est appliqué, peut être affaibli. Ainsi, le film composite peut être pelé pour l'enlever du support. Ceci est particulièrement intéressant lorsque le film composite est utilisé en tant qu'opercule pour sceller un récipient contenant p.ex. de la nourriture. Après avoir réchauffé la nourriture contenue dans le récipient, le film composite peut être pelé pour permettre de sortir la nourriture de son récipient.

La couche de colle hotmelt est de préférence appliquée sur la deuxième face du deuxième film polymère en une quantité entre 5 et 50 g/m², de préférence 20 g/m².

Le premier film polymère et/ou le deuxième film polymère peut avantageusement comprendre un polymère choisi parmi le groupe comprenant le polychlorure de vinyle (PVC), le polyester (PET), le polypropylène orienté (OPP), le polycarbonate (PC), le polyamide orienté (OPA).

L'invention concerne également un procédé de fabrication d'un film composite d'emballage, le procédé comprenant les étapes suivantes :
- mise à disposition d'un premier film polymère avec une première face et une deuxième face opposée à la première face ;
- application d'une couche d'identification sur au moins une zone de la première face du premier film polymère, l'application de la couche d'identification comprenant l'application au moins partielle d'une première impression ;
- mise à disposition d'un deuxième film polymère avec une première face et une deuxième face opposée à la première face, la première face du deuxième film polymère étant tourné vers le premier film polymère ; et
- collage de la première face du deuxième film polymère contre la couche d'identification du premier film polymère.

De préférence, l'application de la couche d'identification comprend l'application au moins partielle d'une couche de polymère au moins partiellement estampée et/ou d'une couche de métal avant application de la première impression.

L'application de la couche de polymère estampée comprend de préférence :
- l'application, de préférence par impression rotative, d'une couche de polymère thermosensible d'une épaisseur préférentiellement comprise entre 0.5 et 5 g/m², de préférence 1.5 g/m², sur la première face du premier film polymère ; et
- l'estampage de la couche de polymère thermosensible en passant le premier film polymère avec la couche de polymère thermosensible entre deux rouleaux, celui des rouleaux entrant en contact avec la couche de polymère thermosensible comprenant une matrice.

L'application de la couche de métal peut être réalisée sous vide, de préférence par évaporation et sublimation d'un métal, de préférence l'aluminium.

Le procédé peut en outre comprendre la destruction partielle par laser de ladite première impression et/ou de ladite deuxième impression et/ou de ladite troisième impression. La puissance du laser peut être comprise entre 1.5 W et 50 W, de préférence 10 W.

La destruction laser de l'impression permet d'intégrer dans le film composite un marquage indélébile de coordonnées de la machine de conditionnement, d'incrémentation, de la date de fabrication ou de tous autres signes réalisés par pinceau laser piloté par ordinateur.

La destruction laser de l'impression est facilitée lorsque l'impression comprend un additif absorbeur d'énergie laser. Par laser, on peut procéder à l'ablation d'une telle impression disposée au coeur du film composite, évitant ainsi de provoquer toute poussière et réalisant une impression ineffaçable et de qualité.

L'application de la couche d'identification comprend avantageusement la gravure de la couche de métal aux endroits non recouverts par la première impression. En gravant les parties de la couche de métal non recouverte par la première impression, des zones de transparence peuvent être créées.

La gravure de la couche de métal peut être chimique ou électrochimique ou par destruction laser. La gravure de la couche de métal peut être chimique à l'aide d'une base et/ou d'un acide, électrochimique à l'aide d'un électrolyte comportant un ou plusieurs sels et d'un courant électrique, ou par destruction laser.

Le procédé peut en outre comprendre l'application d'une seconde impression sur la première impression et/ou l'application d'une troisième impression sur la première face du deuxième support polymère.

La première et/ou deuxième et/ou troisième impression et/ou la couche de polymère estampée et/ou la couche de métal peuvent être appliquées par héliographie et/ou flexographie et/ou offset, de préférence à une résolution entre 10 et 150 µm. L'héliographie, la flexographie et l'impression offset permettent d'imprimer des motifs d'une très grande finesse. Une telle impression à haute résolution permet une excellente qualité d'impression avec des contours nets.

Avantageusement, la couche d'identification comprend, de préférence dans la première et/ou deuxième et/ou troisième impression, au moins un marqueur pigmentaire et/ou un marqueur fluorescent et/ou un marqueur phosphorescent et/ou un marqueur irisant et/ou un marqueur ADN et/ou un additif absorbeur d'énergie laser.

Des éléments d'identification supplémentaires peuvent ainsi être intégrés dans le film composite. Ces éléments d'identification peuvent avoir des niveaux de traçabilité différents. Certains peuvent être reconnus facilement à l'oeil nu, d'autres nécessitant des instruments particuliers.

Le marqueur ADN permet d'intégrer dans le film polymère un élément d'identification qui ne peut être reconnu qu'avec des moyens de laboratoire. Avec un tel élément d'identification, l'authenticité du produit dans l'emballage peut être vérifiée avec très grande certitude.

L'additif absorbeur d'énergie laser facilite l'ablation par laser (YAG CO₂ ou NI) de la couche contenant l'additif pour permettre un marquage d'incrémentation du film composite au cours de son utilisation.

Le collage de la première face du deuxième film polymère contre la couche d'identification du premier film polymère peut être réalisé en déposant une couche adhésive sur la première face du deuxième film polymère et en pressant le premier film polymère avec la couche d'identification contre la couche adhésive. Pour avoir des assemblages performants on utilise de préférence des colles à catalyse avec ou sans solvant. Le pressage peut, dans le cas d'utilisation de colle à solvant, comprendre un séchage de la colle avant contrecollage avec si nécessaire un chauffage des rouleaux de la calandre de contrecollage.

Une couche d'aluminium est avantageusement collée entre la couche d'identification du premier film polymère et le deuxième film polymère, la couche d'aluminium ayant une épaisseur préférentiellement comprise entre 4 et 50 µm, de préférence 12 µm. Une première couche adhésive peut être appliquée sur la première face du deuxième film polymère et la couche d'aluminium peut être pressé contre la première couche adhésive. Une deuxième couche adhésive peut alors être appliquée sur la couche d'aluminium et le premier film polymère peut être pressé avec la couche d'identification contre la deuxième couche adhésive. Une telle couche d'aluminium assure une protection contre la lumière et, plus particulièrement contre les rayons ultraviolets. De plus, elle donne au film composite une mémoire de pli et elle facilite la transmission de la chaleur de fers de scellage aux zones de soudure.

Selon un mode de réalisation particulièrement préféré, le procédé comprend en outre l'application d'une couche de colle hotmelt sur la deuxième face du deuxième film polymère. Le dépôt d'une telle couche de colle hotmelt sur le deuxième film polymère permet de sceller ce dernier sur de multiples supports différents. En effet, il existe des matériaux, tels que par exemple des récipients en polycarbonate, des bouteilles en verre, des bidons métalliques ou des contenants en bois, sur lesquels il était jusqù'à présent pas possible de sceller un film composite. Grâce à la couche de colle hotmelt ces supports peuvent aussi être scellés.

L'application de la couche de colle hotmelt comprend de préférence les étapes suivantes :
- le chauffage d'une colle hotmelt ;
- le passage de la colle hotmelt chauffée, à très haute viscosité et sous pression à travers une buse plate pour former un film de colle hotmelt ;
- le dépôt du film de colle hotmelt sur un rouleau enducteur ; et
- le transfert du film de colle hotmelt du rouleau enducteur sur la deuxième face du deuxième film polymère.

De préférence, la colle hotmelt est maintenue en mélange homogène, malgré les caractéristiques différentes de ses composants, par agitation et pression, la pression étant comprise entre 2 et 250 atm, de préférence 80 atm.

Le film composite peut finalement être refroidi et embobiné pour stockage, transport et/ou usage ultérieur. On obtient ainsi une bobine d'un film composite qui, s'il est échauffé par la face extérieure du premier film polymère, est susceptible de se sceller sur sa face enduite de la couche de colle hotmelt à tous corps rigides tant plastiques que métalliques, bois, verre, carton. Après débobinage, pour éliminer les parties imparfaites de la bobine du film composite, la bobine est tronçonnée à la largeur d'utilisation et éventuellement coupée en morceaux.

Selon un mode de réalisation de l'invention, le film composite d'emballage est utilisé comme opercule pour sceller un récipient, en particulier pour sceller une barquette. Le récipient peut être en matière plastique et/ou en matière métallique et/ou en bois et/ou en verre et/ou en carton. La matière plastique peut être choisie parmi le groupe comprenant le polychlorure de vinyle (PVC), le polypropylène (PP), le polyéthylène (PE), le polystyrène (PS), le polyester (PET), polycarbonate (PC), le polyamide (PA)

Selon un autre mode de réalisation de l'invention, le film composite d'emballage est utilisé pour sceller un support de données, en particulier pour sceller un CD ou un DVD sur sa paroi polycarbonate.

### Description à l'aide des Figures

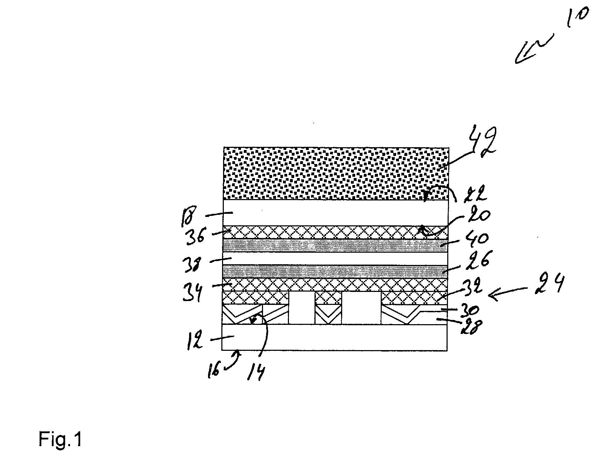

D'autres particularités et caractéristiques de l'invention ressortiront de la description détaillée d'un mode de réalisation avantageux présenté ci-dessous, à titre d'illustration, en se référant au dessin annexé. Celui-ci montre en Fig.1, une vue schématique en coupe à travers un film composite selon un mode de réalisation préféré de l'invention.

La Fig.1 montre un film composite d'emballage selon l'invention utilisé comme opercule pour sceller un récipient tel qu'une barquette.

Le film composite 10 comprend un premier film polymère 12 avec une première face 14 et une deuxième face 16 opposée à la première face, un deuxième film polymère 18 avec une première face 20 et une deuxième face 22 opposée à la première face, la première face 20 du deuxième film polymère 18 étant tournée vers le premier film polymère 12, et une couche d'identification 24 entre le premier film polymère 12 et le deuxième film polymère 18. Le deuxième film polymère 18 est collé contre le premier film polymère 12 au moyen d'une première couche adhésive 26. La première couche adhésive 26, comprenant de préférence une colle à catalyse avec ou sans solvant pour avoir un assemblage performant, est appliquée sur une face de l'un des deux films polymères 12, 18. L'autre des deux films est alors pressé sur la face comprenant la couche adhésive. Le pressage peut, dans le cas d'utilisation de colle à solvant, se faire par un séchage de la colle avant contrecollage, avec si nécessaire un chauffage des rouleaux de la calandre de contrecollage.

Le premier film polymère 12 et le deuxième film polymère 18 comprennent de préférence un polymère choisi parmi le groupe comprenant le polychlorure de vinyle (PVC), le polyester (PET), le polypropylène orienté (OPP), le polycarbonate (PC), le polyamide orienté (OPA).

Afin de sceller le film composite sur une barquette, le film composite est placé avec la deuxième face 22 du deuxième film polymère 18 contre la barquette. Le film polymère 10 est ensuite chauffé dans les zones de scellage à la température de fusion du polymère, qui pour le polypropylène (PP) est de 120°C et pour le polyester (PET) est de 220°C.

Grâce à la couche d'identification 24 intégrée dans le film composite 10, une identification du produit dans la barquette scellée est possible. Comme la couche d'identification 24 est en sandwich entre les deux films polymère 12, 18, elle est protégée d'influences extérieures.

La couche d'identification selon un mode de réalisation particulièrement préféré comprend une couche de polymère 28 thermosensible sur la première face 14 du premier film polymère 12. Le premier film polymère 12 enduit de la couche de polymère 28 thermosensible est pressé entre deux cylindres, un cylindre mou en polyuréthane et un cylindre métallique comportant une matrice avec un micro-relief. La pression et la température de la matrice sont adaptées pour transmettre dans la couche de polymère thermosensible 28 le micro-relief en creux de la matrice.

La couche de polymère estampée ainsi obtenue est ensuite pourvue d'une couche de métal 30. La métallisation se fait sous vide dans une enceinte close où règne un vide partiel mais suffisant pour permettre l'évaporation d'un film en fusion dans des creusets sous lequel défile la couche de polymère estampée à métalliser. Le métal se condense sur la face estampée. L'évaporation, condensation ou sublimation du métal est facilitée par l'usage de résistance électrique de four à enduction et de faisceaux d'électrons pour régulariser la sublimation du métal hors des creusets.

Lorsque la couche de polymère 28 estampé est métallisé, elle fait apparaître des images diffractives, des hologrammes. La métallisation de la couche de polymère estampée peut être localisée.

La couche de polymère 28 estampée et métallisée est pourvue d'une première impression 32. La couche de polymère 28 ainsi obtenue est alors gravée pour comporter des zones de transparence. La gravure peut être chimique à l'aide d'une base et ou d'un acide. Alternativement, la gravure est électrochimique à l'aide d'un électrolyte comportant un ou de plusieurs sels et de courants électriques. Il est également possible de procéder à une gravure par destruction laser.

Une deuxième impression 34 est appliquée sur la première impression 32 et une troisième impression 36 est appliquée sur la première face 20 du deuxième film polymère 18 pour constituer des éléments d'identification supplémentaires. Les deuxième et troisième impressions 34, 36 peuvent être localisées.

Les première, deuxième et/ou troisième impressions sont réalisées par un procédé rotatif dans lequel l'encre appliquée sèche à la vitesse de l'ensemble de la chaîne de fabrication tel que par exemple l'héliographie ou la flexographie. L'impression est réalisée à haute résolution pour créer des motifs ayant une résolution comprise entre 10 et 150 µm.

La couche de polymère 28 peut aussi être déposée par impression héliographique ou flexographique permettant le séchage par évaporation du solvant de la couche ; ou par impression offset permettant le séchage par catalyse du solvant de la couche.

La couche d'identification 10 comprend, de préférence dans les impressions 32, 34, 36, des éléments d'identification supplémentaires tels que des marqueurs pigmentaires et/ou des marqueurs colorants et/ou des marqueurs fluorescents et/ou des marqueurs phosphorescents et/ou des marqueurs irisants et/ou des marqueurs ADN et/ou des additifs absorbeur d'énergie laser.

Ces éléments d'identification supplémentaires permettent d'avoir plusieurs niveaux d'identification et de traçabilité. Certains éléments d'identification peuvent être reconnus facilement à l'oeil nu, d'autres nécessitant des instruments particuliers.

Le marqueur ADN permet d'intégrer dans le film polymère un élément d'identification qui ne peut être reconnu qu'avec des moyens de laboratoire. Avec un tel élément d'identification, l'authenticité du produit dans l'emballage peut être vérifiée avec très grande certitude.

Grâce à l'additif absorbeur d'énergie laser, il est possible d'intégrer dans le film composite un marquage indélébile de coordonnées de la machine de conditionnement, d'incrémentation, de la date de fabrication ou de tous autres signes réalisés par pinceau laser piloté par ordinateur. Par laser, p.ex. laser YAG CO₂ ou laser NI, on peut procéder à l'ablation d'une impression comprenant l'additif absorbeur, disposée au coeur du film composite, évitant ainsi de provoquer toute poussière et réalisant une impression ineffaçable et de qualité. On peut utiliser un faisceau laser de puissance comprise entre 1.5 W et 25 W, de préférence 10 W pour réaliser un marquage variable permettant une incrémentation systématique avec des traits d'une épaisseur compris entre 25 et 500 µm de préférence 100 µm à travers le premier film polymère du film composite, sans endommager ce polymère.

Entre le deuxième film polymère 18 et la première couche adhésive 26, de trouve une couche d'aluminium 38 collée au deuxième film polymère 18 à l'aide d'une deuxième couche adhésive 40.

La couche d'aluminium 38 est une feuille d'aluminium ayant une épaisseur comprise entre 4 et 50 µm de préférence 12 µm. Une telle couche d'aluminium 38 assure non seulement la protection contre la lumière, et particulièrement aux UV, mais aussi la mémoire de pli qui permet de soulever une partie du film composite 10 constituant l'opercule pour avoir une ouverture sans devoir l'enlever complètement.

La conductivité thermique de l'aluminium facilite aussi la transmission de la chaleur des fers de scellage aux zones de soudure de telle sorte que le gradient de température des fers et de la zone scellante est compris entre 2 et 25°C de préférence 5°C, ce qui évite la déformation des images diffractives par la déformation du premier film polymère 12 par la chaleur.

Afin de pouvoir sceller le film composite 10 sur de multiples supports, la deuxième face 22 du deuxième film polymère 18 est enduit d'une couche de colle hotmelt 42.

En effet, il existe des matériaux, tels que par exemple des récipients en polycarbonate, des bouteilles en verre, des bidons métalliques ou des contenants en bois, sur lesquels il était jusqu'à présent pas possible de sceller un film composite.

Grâce à la couche de colle hotmelt 42 ces supports peuvent aussi être scellés. La scellabilité du film composite 10 enduit est fonction de la nature de la couche de colle hotmelt 42 qui la recouvre. Ainsi avec un mélange ternaire de cire, de polymères thermofusibles et d'éthylvinylacétate (EVA), il est obtenu une excellente adhésion du film composite à la barquette en polycarbonate (PC). Les polymères thermofusibles peuvent être des polyoléfines thermofusibles.

Grâce à la couche de colle hotmelt 42 la nature du support peut être de nature très variée : polychlorure de vinyle (PVC), polypropylène (PP), polystyrène (PS), polyester (PET), polyamide (PA) et polycarbonate (PC) et métallique ou bois ou verre. L'adhésion est fournie par la présence des EVA et des polymères présents dans la couche de colle hotmelt.

La composition de la colle hotmelt est réglable en fonction de l'usage. Ainsi, pour éviter toute déformation des supports thermosensibles, il sera possible de réaliser un mélange qui collera entre 50 et 100°C de préférence 95°C, pour les plastiques pasteurisables entre 100 et 150°C de préférence 120°C, pour les pasteurisables entre 120 et 180°C de préférence 130°C.

Pour obtenir une bonne adhésion à un support en polycarbonate, la couche de colle hotmelt 42 comprend de préférence au moins 2 à 50% en poids, de préférence 30% en poids, d'éthylvinylacétate (EVA).

La couche de colle hotmelt 42 comprend des particules minérales non-fusibles, de préférence dans une proportion pondérale de 1 à 20% de préférence 5%. Grâce aux particules minérales non-fusibles, par exemple des cires micro-cristalline ou des particules de silices, solidité de l'adhésion est perturbé et le film composite 10 est rendu pelable.

En faisant varier la quantité du dépôt de colle hotmelt sur la deuxième face 22 du deuxième film polymère 18, l'adhésion du film composite 10 sur le support peut être réglée. Avec une quantité de colle hotmelt entre 5 et 50 g/m², de préférence 20 g/m², l'adhésion du film composite 10 à un support en polycarbonate est telle que la soudure résiste à la force exercée par un liquide compris entre 0.5 et 25 g d'eau en rotation entre 4 000 et 15 000 tours/min. La soudure résiste à une pression négative comprise entre 0.1 et 0.9 atm.

L'inventeur à mis au point un système d'extrusion par buse et rouleau enducteur permettant de déposer à chaud la couche de colle hotmelt 42 sur le film composite 10.

Cette enduction solide à température ambiante est déposée à très haute viscosité grâce à un extrudeur à visse et sous pression pour assurer la fusion et l'homogénéité d'un mélange ternaire de cire, de paraphine, de polymères thermofusibles et d'éthylvinylacetate (EVA) qui constitue à froid in solide en pain. Le liquide en fusion sortant de l'extrudeur est transmis, toujours sous pression et à chaud, à une buse plate qui déverse un film de colle hotmelt sur un rouleau enducteur ; ce dernier transfert le film de colle hotmelt sur la deuxième face 22 du deuxième film polymère 18 du film composite 10. la couche de colle hotmelt 42 se solidifie sur le film composite par refroidissement.

Il est ainsi formé une couche de colle hotmelt de viscosité à chaud de 1 000 à 50 000 centipoises, de préférence 15 000 centipoises.

Selon un mode de réalisation intéressant, le film composite selon la présente invention peut être appliqué sur un support de données tel qu'un CD ou un DVD. Le support est protégé, et, grâce à la couche d'identification dans le film composite, une identification du support est possible. Grâce aux nombreux éléments d'identification et aux différents niveaux de détection, une authentification du support peut être assurée.

### Signes de référence

- 10: film composite
- 12: premier film polymère
- 14: première face du premier film polymère
- 16: deuxième face du premier film polymère
- 18: deuxième film polymère
- 20: première face du deuxième film polymère
- 22: deuxième face du deuxième film polymère
- 24: couche d'identification
- 26: première couche adhésive
- 28: couche de polymère
- 30: couche de métal
- 32: première impression
- 34: deuxième impression
- 36: troisième impression
- 38: couche d'aluminium
- 40: deuxième couche adhésive
- 42: couche de colle hotmelt

## Revendications

1. Film composite d'emballage comprenant :
• un premier film polymère avec une première face et une deuxième face opposée à ladite première face ;
• une couche d'identification sur au moins une zone de ladite première face dudit premier film polymère, ladite couche d'identification comprenant une première impression ;
• un deuxième film polymère avec une première face et une deuxième face opposée à ladite première face, ladite première face dudit deuxième film polymère étant tourné vers ledit premier film polymère ; et
• au moins une couche adhésive entre ladite couche d'identification dudit premier film polymère et ledit deuxième film polymère.

2. Film composite selon la revendication 1, dans lequel ladite couche d'identification comprend une couche de polymère, de préférence thermosensible, entre ledit premier film polymère et ladite première impression, ladite couche de polymère étant au moins partiellement estampée et/ou métallisée.

3. Film composite selon la revendication 2, dans lequel ladite couche de polymère métallisée est gravée aux endroits non recouverts par ladite première impression.

4. Film composite selon l'une quelconque des revendications précédentes, dans laquelle ladite couche d'identification comprend en outre une deuxième impression sur ladite première impression et/ou une troisième impression sur ladite première face dudit deuxième film polymère.

5. Film composite selon l'une des revendications précédentes, dans lequel ladite couche d'identification comprend au moins un marqueur pigmentaire et/ou un marqueur colorant et/ou un marqueur fluorescent et/ou un marqueur phosphorescent et/ou un marqueur irisant et/ou un marqueur ADN et/ou un additif absorbeur d'énergie laser.

6. Film composite selon l'une quelconque des revendications précédentes, dans lequel ladite première et/ou deuxième et/ou troisième impression et/ou ladite couche de polymère estampée et/ou ladite couche de métal est appliquée par héliographie et/ou flexographie et/ou offset, de préférence à une résolution comprise entre 10 et 150 µm.

7. Film composite selon l'une quelconque des revendications précédentes, comprenant une couche d'aluminium, ayant de préférence une épaisseur comprise entre 4 et 50 µm, avantageusement 12 µm, collée entre ladite couche d'identification dudit premier film polymère et ledit deuxième film polymère.

8. Film composite selon l'une des revendications précédentes, dans lequel ladite couche adhésive comprend une colle à catalyse avec ou sans solvant.

9. Film composite selon l'une des revendications précédentes, comprenant en outre une couche de colle hotmelt sur ladite deuxième face dudit deuxième film polymère.

10. Film composite selon la revendication 9, dans lequel ladite couche de colle hotmelt comprend au moins 2 à 50% en poids, de préférence 30% en poids, d'éthylvinylacétate.

11. Film composite selon la revendication 9 ou 10, dans lequel ladite couche de colle hotmelt comprend un mélange de cire, de paraphine, de polymères thermofusibles et d'éthylvinylacétate.

12. Film composite selon l'une quelconque des revendications 11 à 13, dans lequel ladite couche de colle hotmelt comprend des particules minérales non-fusibles, tel que la silice, de préférence dans une proportion pondérale de 1 à 20%, de préférence 5%.

13. Film composite selon l'une quelconque des revendications 9 à 12, dans lequel ladite couche de colle hotmelt est appliquée sur ladite deuxième face dudit deuxième film polymère en une quantité entre 5 et 50 g/m², de préférence 20 g/m².

14. Film composite selon l'une quelconque des revendications précédentes, dans lequel ledit premier film polymère et/ou ledit deuxième film polymère comprend un polymère choisi parmi le groupe comprenant le polychlorure de vinyle (PVC), le polyester (PET), le polypropylène orienté (OPP), le polycarbonate (PC), le polyamide orienté (OPA).

15. Procédé de fabrication d'un film composite d'emballage, le procédé comprenant les étapes suivantes :
• mise à disposition d'un premier film polymère avec une première face et une deuxième face opposée à ladite première face ;
• application d'une couche d'identification sur au moins une zone de ladite première face dudit premier film polymère, l'application de ladite couche d'identification comprenant l'application au moins partielle d'une première impression ;
• mise à disposition d'un deuxième film polymère avec une première face et une deuxième face opposée à ladite première face, ladite première face dudit deuxième film polymère étant tourné vers ledit premier film polymère ; et
• collage de ladite première face dudit deuxième film polymère contre ladite couche d'identification dudit premier film polymère.

16. Procédé selon la revendication 15, dans lequel l'application de ladite couche d'identification comprend l'application au moins partielle d'une couche de polymère au moins partiellement estampée et/ou d'une couche de métal.

17. Procédé selon la revendication 16, dans lequel l'application de ladite couche de polymère estampée comprend :
• l'application, de préférence par impression rotative, d'une couche de polymère thermosensible d'une épaisseur préférentiellement comprise entre 0.5 et 5 g/m² de préférence 1.5 g/m² sur ladite première face dudit premier film polymère ; et
• l'estampage de ladite couche de polymère thermosensible en passant le premier film polymère avec ladite couche de polymère thermosensible entre deux rouleaux, celui des rouleaux entrant en contact avec ladite couche de polymère thermosensible comprenant une matrice.

18. Procédé selon la revendication 16 ou 17, dans lequel l'application de ladite couche de métal est réalisée sous vide, de préférence par évaporation et sublimation d'un métal.

19. Procédé selon l'une quelconque des revendications 15 à 18, comprenant la destruction partielle par laser d'une puissance préférentiellement comprise entre 1.5 W et 50 W, de préférence 10 W, de ladite première impression et/ou de ladite deuxième impression et/ou de ladite troisième impression.

20. Procédé selon l'une quelconque des revendications 15 à 19, dans lequel l'application de ladite couche d'identification comprend la gravure de ladite couche de métal aux endroits non recouverts par ladite première impression.

21. Procédé selon la revendication 20, dans lequel la gravure de ladite couche de métal est chimique ou électrochimique ou par destruction laser.

22. Procédé selon l'une quelconque des revendications 15 à 21, comprenant en outre l'application d'une seconde impression sur ladite première impression et/ou l'application d'une troisième impression sur ladite première face dudit deuxième film polymère.

23. Procédé selon l'une quelconque des revendications 15 à 22, dans lequel ladite première et/ou deuxième et/ou troisième impression et/ou ladite couche de polymère estampée et/ou ladite couche de métal est appliquée par héliographie et/ou flexographie et/ou offset, de préférence à une résolution entre 10 et 150 µm.

24. Procédé selon l'une quelconque des revendications 15 à 23, dans lequel ladite couche d'identification comprend au moins un marqueur pigmentaire et/ou un marqueur fluorescent et/ou un marqueur phosphorescent et/ou un marqueur irisant et/ou un marqueur ADN et/ou un additif absorbeur d'énergie laser.

25. Procédé selon l'une quelconque des revendications 15 à 24, dans lequel le collage de ladite première face dudit deuxième film polymère contre ladite couche d'identification dudit premier film polymère est réalisé en déposant une couche adhésive sur ladite première face dudit deuxième film polymère et en pressant ledit premier film polymère avec ladite couche d'identification contre ladite couche adhésive.

26. Procédé selon l'une quelconque des revendications 15 à 25, dans lequel une couche d'aluminium ayant une épaisseur préférentiellement comprise entre 4 et 50 µm, de préférence 12 µm, est collée entre ladite couche d'identification dudit premier film polymère et ledit deuxième film polymère.

27. Procédé selon l'une quelconque des revendications 15 à 26, comprenant en outre l'application d'une couche de colle hotmelt sur ladite deuxième face dudit deuxième film polymère.

28. Procédé selon la revendication 27, dans lequel l'application de ladite couche de colle hotmelt comprend :
le chauffage d'une colle hotmelt ;
le passage de ladite colle hotmelt chauffée, à très haute viscosité et sous pression à travers une buse plate pour former un film de colle hotmelt ;
le dépôt dudit film de colle hotmelt sur un rouleau enducteur ; et
le transfert dudit film de colle hotmelt dudit rouleau enducteur sur ladite deuxième face dudit deuxième film polymère.

29. Procédé selon la revendication 28, dans lequel ladite colle hotmelt est maintenue en mélange homogène par agitation et pression, ladite pression étant comprise entre 2 et 250 atm, de préférence 80 atm.

30. Utilisation d'un film composite d'emballage selon l'une quelconque des revendications 1 à 14 comme opercule pour sceller un récipient, en particulier pour sceller une barquette.

31. Utilisation selon la revendication 30, dans laquelle ledit récipient est en matière plastique et/ou en matière métallique et/ou en bois et/ou en verre et/ou en carton.

32. Utilisation selon la revendication 31, dans laquelle ladite matière plastique étant choisie parmi le groupe comprenant le polychlorure de vinyle (PVC), le polypropylène (PP), le polyéthylène (PE), le polystyrène (PS), le polyester (PET), polycarbonate (PC), le polyamide (PA).

33. Utilisation d'un film composite d'emballage selon l'une quelconque des revendications 1 à 14 pour sceller un support de données, en particulier pour sceller un CD ou un DVD sur sa paroi polycarbonate.
